## Europäisches Patentamt

## European Patent Office

## Office européen des brevets

(19)

(11) Veröffentlichungsnummer: **0 257 175 B1**

(12) **EUROPÄISCHE PATENTSCHRIFT**

(45) Veröffentlichungstag der Patentschrift: 27.03.91

(51) Int. Cl.⁵: **B23P 11/02**, //F01L1/04, F16H53/02

(21) Anmeldenummer: **87101122.7**

(22) Anmeldetag: **27.01.87**

(54) Verfahren und Vorrichtung zur Befestigung von Teilen auf einem Hohlkörper.

(30) Pricrität: **12.08.86 DE 3627258**

(43) Veröffentlichungstag der Anmeldung:
**02.03.88 Patentblatt 88/09**

(45) Bekanntmachung des Hinweises auf die
Patenterteilung:
**27.03.91 Patentblatt 91/13**

(84) Benannte Vertragsstaaten:
**AT BE CH DE ES FR GB GR IT LI LU NL SE**

(56) Entgegenhaltungen:
EP-A- 0 015 712       DE-A- 3 323 640
FR-A- 2 548 079       GB-A- 2 050 207
JP-A-46 021 299       US-A- 3 739 456
US-A- 3 977 068

(73) Patentinhaber: **Balcke-Dürr AG**
**Homberger Strasse 2 Postfach 1240**
**W-4030 Ratingen 1(DE)**

(72) Erfinder: **Krips, Herbert**
**Grabelohstrasse 176**
**W-4630 Bochum 7(DE)**
Erfinder: **Podhorsky, Miroslan, Dr.**
**Elisabethstrasse 10a**
**W-4030 Ratingen 1(DE)**

(74) Vertreter: **Patentanwälte Dipl.-Ing. Alex Sten-**
**ger Dipl.-Ing. Wolfram Watzke Dipl.-Ing.**
**Heinz J. Ring**
**Kaiser-Friedrich-Ring 70**
**W-4000 Düsseldorf 11(DE)**

**Beschreibung**

Die Erfindung betrifft ein Verfahren und eine Vorrichtung zur Befestigung von einem oder mehreren, jeweils mit einer Öffnung versehenen Teilen auf einem Hohlkörper, vorzugsweise von Nocken, Lagerringen und/oder Antriebselementen auf einer Hohlwelle, wobei im Ausgangszustand der in den Teilen ausgebildete Innendurchmesser der Öffnung größer als der Außendurchmesser der für ihre Befestigung vorgesehenen Fläche am Hohlkörper ist und die Teile in die vorgegebene Position auf dem Hohlkörper gebracht werden, bevor der Befestigungsvorgang erfolgt.

Es ist auf den verschiedensten Gebieten der Technik bekannt, anstelle des Herausarbeitens komplizierter Teile aus dem Vollen diese Teile dadurch herzustellen, daß auf einem Grundbauteil entsprechend geformte Zusatzteile befestigt werden, so daß sich die äußere Form des Bauteils auf kostengünstigere Weise herstellen läßt. Das Befestigen der zusätzlichen Bauteile auf dem Grundbauteil erfolgt durch Schweißen, Löten, Schrumpfen oder Kleben.

Wenn bei den herzustellenden Bauteilen Material und/oder Gewicht eingespart werden soll, finden häufig auch Hohlkörper als Grundbauteil Verwendung. Auch in diesem Fall ist im Ausgangszustand die Öffnung in dem auf dem Hohlkörper zu befestigenden Teil größer als die Befestigungsstelle des Hohlkörpers, so daß das jeweilige Teil in die vorgegebene Position auf dem Hohlkörper gebracht werden kann, bevor der Befestigungsvorgang erfolgt.

Beim Schweißen und Löten treten örtliche Wärmebeanspruchungen insbesondere des Hohlkörpers auf, die zu unerwünschten und schwer zu kontrollierenden Verformungen oder Veränderungen führen können. Die Befestigung durch Kleben besitzt den Nachteil, daß keine Sicherheit darüber besteht, ob die Kontaktflächen voll mit dem Kleber benetzt sind.

Beim Aufschrumpfverfahren müssen der Außendurchmesser der Lagerstelle und der Innendurchmesser der Öffnung im Aufzuschrumpfenden Teil mit hoher Präzision hergestellt werden, um die notwendigen kleinen Toleranzen zu erfüllen, die für den gewünschten Halt erforderlich sind. Die durch den Temperaturunterschied erzielte Durchmesserdifferenz ist proportional dem Temperatursprung zwischen den Bauteilen, dem Temperaturausdehnungskoeffizienten und dem Radius der Bauteile. Da die elastische Verformung der miteinander zu verbindenden Bauteile mit dem Radius quadratisch verknüpft ist und der in der Praxis erzielbare Temperaturunterschied begrenzt ist, ergibt sich in vielen Fällen, insbesondere bei bestimmten Werkstoffkombinationen, nur eine unzureichende Haftung.

Insbesondere bei betriebsbedingt auftretenden Temperaturdifferenzen im hergestellten Bauteil können sich aufgeschrumpfte Teile lockern.

Der Erfindung liegt die Aufgabe zugrunde, ein Verfahren und eine Vorrichtung der eingangs beschriebenen Art zu schaffen, mit denen auf einfache und kostengünstige Weise eine zuverlässige Befestigung von Teilen auf einem Hohlkörper durchgeführt werden kann, ohne daß die Gefahr einer Überbeanspruchung des Hohlkörpers oder eines Lockerns der Teile besteht.

Die Lösung dieser Aufgabenstellung durch das erfindungsgemäße Verfahren ist dadurch gekennzeichnet, daß vor dem Aufbringen der Teile auf den Hohlkörper durch Aufwärmen der Teile und/oder Abkühlen des Hohlkörpers eine Temperaturdifferenz erzeugt wird und daß jedes Teil durch Aufweiten des Hohlkörpers zumindest im Bereich der Befestigungsstelle sowie durch anschließendes Aufschrumpfen der Teile infolge des stattfindenden Temperaturausgleichs auf dem Hohlkörper befestigt wird. Das Aufweiten des Hohlkörpers geschieht gemäß einem weiteren Merkmal der Erfindung durch Einbringen eines Druckmittels vorzugsweise hydraulisch, kann aber auch durch Sprengen, elektro-hydraulische Aufweitung oder magnetische Kräfte erfolgen.

Durch das Aufweiten wird der Hohlkörper plastisch verformt, so daß bei dem erfindungsgemäßen Verfahren bezüglich des Innendurchmessers der Öffnung in den zu befestigenden Teilen und des Außendurchmessers der zugehörigen Lagerstellen auf dem Hohlkörper nur sehr grobe Toleranzen eingehalten werden müssen, wodurch die Herstellungskosten reduziert werden. Durch das Aufweiten des Hohlkörpers kann sowohl eine kraftschlüssige als auch eine formschlüssige Befestigung der Teile erfolgen, wobei die erforderlichen Verformungskräfte zur Erzielung der jeweils benötigten Haltekraft bei einem hydraulischen Aufweiten auf einfache Weise durch die Wahl der entsprechenden Parameter erzeugt werden. Die durch das Aufweiten erzielte Haltekraft ergibt sich aufgrund der größeren elastischen Rückverformung des den Hohlkörper umgebenden Teils. Diese Haltekraft wird dadurch erhöht, daß anschließend an das Aufweiten ein Aufschrumpfvorgang stattfindet, wenn der Temperaturausgleich zwischen den wärmeren Befestigungsteilen und dem kälteren Hohlkörper erfolgt. Aus diesem Grunde ist das erfindungsgemäße Verfahren auch für die Befestigung dünnwandiger Teile, wie Hülsen und Lagerschalen, geeignet, bei denen eine elastische Rückverformung nach einem Aufweiten des Hohlkörpers nur eine unzureichende Haftverbindung ergeben würde. Beim erfindungsgemäßen Verfahren ist die Haltekraft eine Funktion des Aufweitparameters, des Temperaturunterschiedes und der Temperaturausdehnungskoeffizienten der Werkstoffe der zu verbindenden Teile. Diese drei Parameter lassen sich bei einer gewünschten Haftung variieren und sind aufgrund der bekannten Werkstoffeigenschaften auch im voraus berechenbar. Insgesamt ergibt sich somit eine wiederholgenaue Befestigung von Teilen auf einem Hohlkörper, wobei das Verfahren nur einen geringen Aufwand erfordert, so daß es kostengünstig auch für kleinere Serien durchgeführt werden kann.

Gemäß einem weiteren Merkmal der Erfindung kann der Hohlkörper im Bereich der Befestigungsstelle der einzelnen Teile mit unterschiedlichen Drücken oder Parametern aufgeweitet werden, sofern mehrere unterschiedliche Teile auf einem Hohlkörper befestigt werden sollen.

Die erfindungsgemäße Vorrichtung ist gekennzeichnet durch eine in axialer Richtung mindestens zweigeteilte Matrize, die mit auf die jeweilige Ausdehnung abgestimmten Aussparungen sowohl für den Hohlkörper als auch für den bzw. die zu befestigenden Teilen und mit Abstützflächen für die zwischen den Teile liegenden Abschnitte des Hohlkörpers versehen ist. Der mit den eine höhere Temperatur besitzenden Teilen versehene Hohlkörper wird in die geöffnete Matrize eingelegt, wodurch gleichzeitig eine exakte Positionierung der Teile auf dem Hohlkörper erfolgt. Nach Schließen der Matrize wird z.B. Druckmittel mit vorgegebenem Druck in den Hohlkörper eingeführt, so daß sich dieser im Bereich der Befestigungsstellen der Teile aufweitet. Je nach Gestaltung der Verbindungsfläche zwischen Hohlkörper und zu befestigendem Teil erfolgt durch dieses Aufweiten eine kraftschlüssige und/oder eine formschlüssige Verbindung.

Nach Öffnen der Matrize wird das fertige, in einem Fertigungsschritt hergestellte Bauteil entnommen, wobei sowohl während des Aufweitens als auch anschließend der Aufschrumpfvorgang stattfindet, wenn sich die Temperatur zwischen den wärmeren Teilen und dem kälteren Hohlkörper ausgleicht.

Die Verwendung dieser erfindungsgemäßen Matrize erlaubt es, alle Teile mit nur einem, und zwar dem höchst erforderlichen Druck auf dem Hohlkörper zu befestigen, da die Matrize die Abstützung der schwächeren Bauteile übernimmt, z.B. der Hohlkörperabschnitte zwischen den zu befestigenden Teilen, so daß diese Abschnitte vor Überbeanspruchung zuverlässig geschützt werden.

Bei einer alternativen Ausführungsform der Erfindung ist die Vorrichtung durch eine in den Hohlkörper einführbare Sonde gekennzeichnet, auf deren Oberfläche der axialen Erstreckung des jeweils zu befestigenden Teils entsprechende Dichtringpaare angeordnet sind und die zwischen den Dichtringpaaren jeweils mit mindestens einem Entlastungskanal versehen ist. Durch die Dichtringpaare wird die Aufweitung des Hohlkörpers auf die jeweiligen Befestigungsbereiche beschränkt. Um ein Aufweiten des Hohlkörpers zwischen diesen Bereichen auszuschließen, besitzt die Sonde zwischen den Dichtringpaaren Entlastungskanäle, die einen unerwünschten Druckaufbau in diesen Abschnitten des Hohlkörpers verhindern.

Auf der Zeichnung sind vier Ausführungsbeispiele herzustellender Bauteile sowie die zugehörigen Vorrichtungen dargestellt, und zwar zeigen:

Fig. 1    einen Längsschnitt durch eine zweiteilige Matrize für ein erstes Ausführungsbeispiel eines mit vier Teilen zu versehenden Hohlkörpers, wobei in der rechten Hälfte der Ausgangszustand und in der linken Hälfte der Endzustand dargestellt ist,

Fig. 2    einen Querschnitt gemäß der Schnittlinie II-II in Fig.1, wobei in der rechten Hälfte wiederum der Ausgangszustand und in der linken Hälfte der Endzustand dargestellt ist,

Fig. 3    einen weiteren Querschnitt gemäß der Schnittlinie III-III in Fig.1 entsprechend der Darstellung in Fig.2,

Fig. 4    ein zweites Ausführungsbeispiel eines mit vier Teilen zu versehenden Hohlkörpers in einer Seitenansicht, teilweise im Schnitt,

Fig. 5    eine Stirnansicht gemäß dem Pfeil V in Fig.4,

Fig. 6    eine dritte Ausführungsform eines in einer Matrize befindlichen Hohlkörpers mit einem daran zu befestigenden Teil, wobei wiederum in der rechten Hälfte der Darstellung der Ausgangszustand und in der linken der Endzustand dargestellt ist,

Fig. 7    ein viertes Ausführungsbeispiel anhand einer teilweise geschnittenen Seitenansicht, bei dem mehrere Hohlkörper durch jeweils auf ihnen befestigte Teile miteinander verbunden sind, und

Fig. 8    einen Schnitt gemäß der Schnittlinie VIII-VIII in Fig.7.

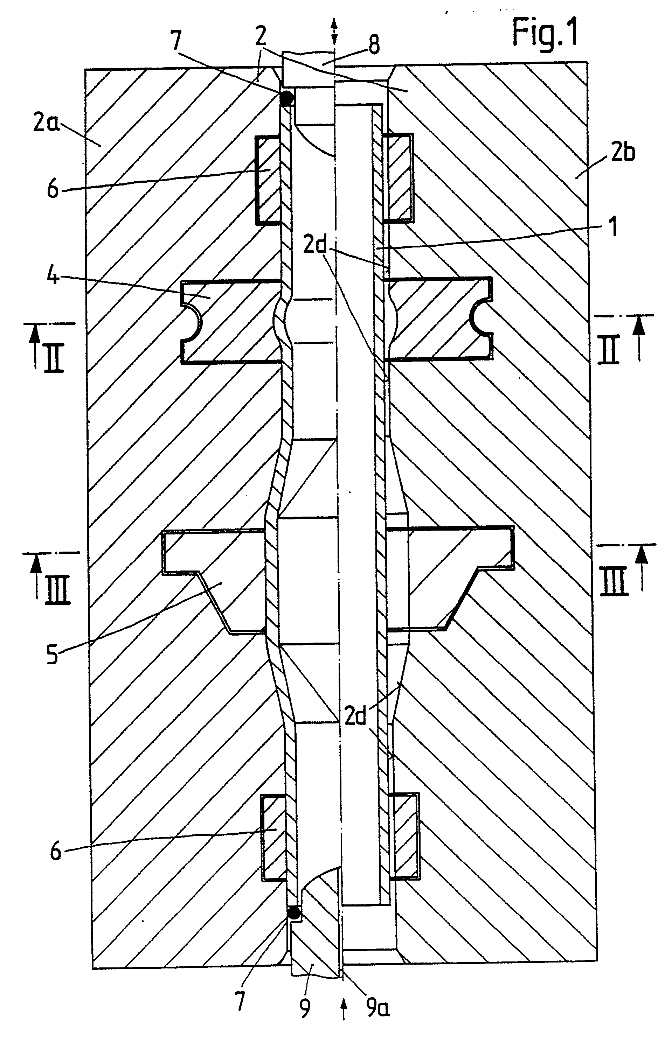

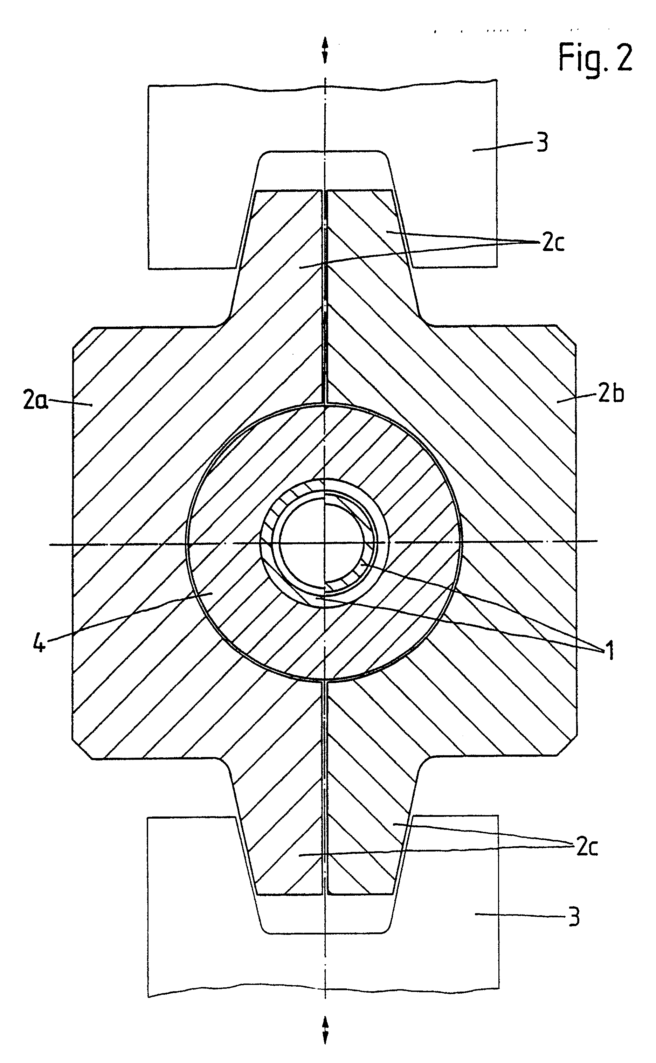

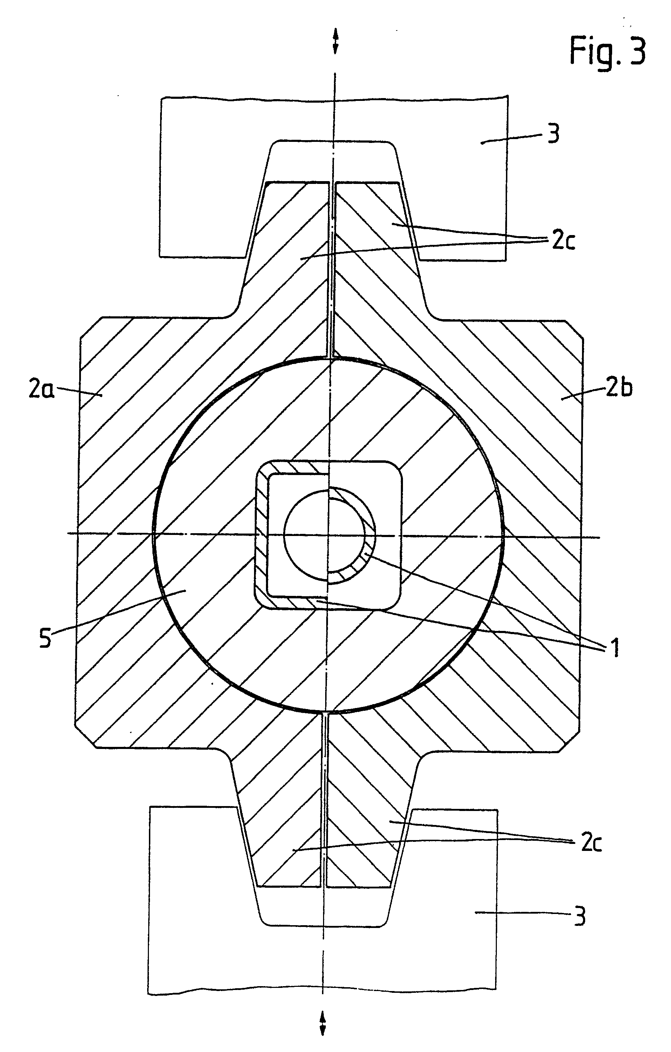

Das erste Ausführungsbeispiel gemäß den Figuren 1 bis 3 zeigt einen zylindrischen Hohlkörper 1 mit kreisförmigem Querschnitt, der in eine zentrale Aussparung einer Matrize 2 eingelegt wird. Diese Matrize 2 besteht aus den beiden Matrizenhälften 2a und 2b, die an gegenüberliegenden Längsseiten mit Flanschen 2c versehen sind. Über diese Flansche 2c können die Matrizenhälften 2a und 2b miteinander verklammert werden, wie dies in den Figuren 2 und 3 durch querbewegliche Klammern 3 angedeutet ist.

Vor dem Einlegen des Hohlkörpers 1 in die Matrize 2 werden auf den Hohlkörper 1 beim Ausführungsbeispiel nach Fig.1 vier Teile 4,5 und 6 aufgeschoben, die zuvor erwärmt worden sind. Auch für diese Teile 4,5,6 ist in den Matrizenhälften 2a und 2b jeweils eine entsprechende Aussparung ausgebildet, so daß sich nach dem Einlegen des mit den Teilen 4,5,6 versehenen Hohlkörpers 1 in die Matrize 2 eine ordnungsgemäße Zuordnung der Teile 4,5 und 6 zum Hohlkörper 1 ergibt.

Wie die jeweils rechte Hälfte der Figuren 1 bis 3 erkennen läßt, sind die in den Teilen 4,5 und 6 ausgebildeten Öffnungen im Ausgangszustand größer als ihre Befestigungsstelle am Hohlkörper 1. Beim dargestellten Ausführungsbeispiel sind die Öffnungen in den Teilen 4 und 6 kreisförmig mit einem Durchmesser, der geringfügig größer als der Außendurchmesser des Hohlkörpers 1 an der betreffenden Stelle ist. Die Öffnung im Teil 5 ist - wie Fig.3 erkennen läßt - quadratisch mit einer Kantenlänge, die größer ist als der Außendurchmesser des Hohlkörpers 1 an dieser Stelle.

Nach dem Schließen der beiden Matrizenhälften 2a und 2b wird die zentrale Öffnung der Matrize 2 an beiden Enden verschlossen. Dies geschieht beim Ausführungsbeispiel an einem Ende durch einen mittels einer Dichtung 7 abgedichteten Verschlußstopfen 8. Am anderen Ende wird ein Anschlußstück 9 verwendet, das ebenfalls mittels einer Dichtung 7 abgedichtet ist. Durch eine Bohrung 9a im Anschlußstück 9 wird nunmehr ein Druckmittel in den Hohlkörper 1 eingebracht, das dazu führt, daß sich der Hohlkörper 1 insbesondere im Bereich der Befestigungsstellen der Teile 4,5 und 6 aufweitet, wodurch zugleich eine feste Verbindung zwischen dem Hohlkörper 1 und den Teilen 4,5,6 erfolgt. Während die Verbindung zwischen den Teilen 4 und 6 und dem Hohlkörper 1 im wesentlichen kraftschlüssig ist, ergibt sich bei der Befestigung des Teiles 5 eine zusätzliche formschlüssige Verbindung, weil der Hohlkörper 1 im Bereich der quadratischen Öffnung des Teiles 5 derart verformt wird, daß hohen Verdrehungsmomenten des Teiles 5 auf dem Hohlkörper 1 Formschluß entgegengesetzt wird.

Zwischen den Aussparungen für die Teile 4,5 und 6 können in den Matrizenhälften 2a und 2b Abstützflächen 2d ausgebildet sein, die verhindern, daß sich der Hohlkörper 1 in diesen Abschnitten bei der Beaufschlagung mit Druckmittel unerwünscht ausdehnt.

Nach dem axialen Herausbewegen des Verschlußstopfens 8 und des Anschlußstückes 9, dem seitlichen Abziehen der Klammern 3 und dem Öffnen der Matrize 2 kann der Hohlkörper 1 mit den auf ihm befestigten Teilen 4,5 und 6 entnommen werden. Die Matrize 2 steht für den nächsten Bearbeitungsvorgang zur Verfügung.

Bereits während des Aufweitvorganges und auch nach dem Entnehmen des Hohlkörpers 1 mit den auf ihm befestigten Teilen 4,5 und 6 erfolgt ein Temperaturausgleich zwischen den wärmeren Teilen 4,5 und 6 und dem kälteren Hohlkörper 1. Hierdurch findet ein Aufschrumpfvorgang statt, der zusätzlich zu der durch das hydraulische Aufweiten erzeugten Haltekraft eine Haltekraft erzeugt, die sich auf der Reduzierung des Innendurchmessers der Öffnung in den Teilen 4,5 und 6 beim Abkühlvorgang ergibt und vom Temperaturunterschied, dem Temperaturausdehnungskoeffizienten der Werkstoffe und den geometrischen Abmessungen der Teile abhängt. Anstelle oder zusätzlich zur Aufwärmung der Teile 4,5 und 6 kann auch eine Unterkühlung des Hohlkörpers 1 erfolgen, um diese zusätzliche Haltekraft zu erzeugen.

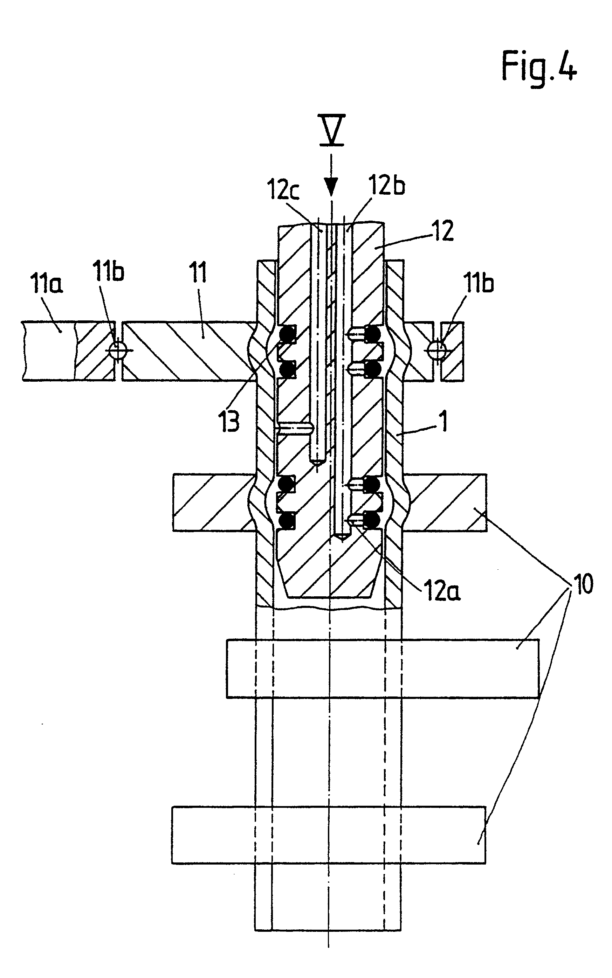

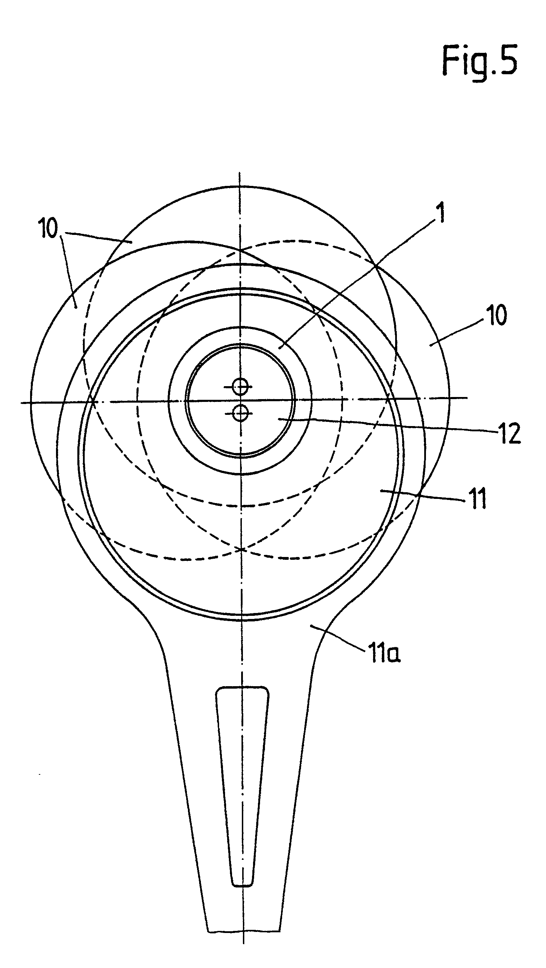

Beim zweiten Ausführungsbeispiel nach den Figuren 4 und 5 sollen auf einem zylindrischen Hohlkörper 1 mit kreisförmigem Querschnitt vier Teile 10 bzw. 11 befestigt werden. Die Befestigung erfolgt mit Hilfe einer in den Hohlkörper 1 einführbaren Sonde 12, die einen Außendurchmesser hat, der geringfügig kleiner als der Innendurchmesser des Hohlkörpers 1 im Ausgangszustand ist. An den Befestigungsstellen der Teile 10 bzw. 11 sind Dichtringpaare 13 auf der Sonde 12 angeordnet. Jedes Dichtringpaar 13 bildet zwischen sich einen Aufweitraum, der durch einen Verbindungskanal 12a mit dem Zentralen Druckkanal 12b der Sonde in Verbindung steht. Durch Einführen von Druckmittel in den zentralen Druckkanal 12b erfolgt somit jeweils zwischen den Dichtringpaaren 13 ein gezieltes aufweiten des Hohlkörpers 1. Damit die zwischen den Dichtringpaaren 13 liegenden Abschnitte des Hohlkörpers 1 mit Sicherheit nicht mit Druck beaufschlagt werden, sind diese Abschnitte jeweils durch einen Entlastungskanal 12c mit der Atmosphäre verbunden. Die Stirnansicht in Fig.5 zeigt, daß das auf dem Hohlkörper 1 durch partielles Aufweiten befestigte Teil 11 als eine Art Kurbel ausgebildet ist, deren feststehender Teil 11a gegenüber dem auf dem Hohlkörper 1 befestigten Teil 11 durch Kugeln 11b drehbar ist. Auch bei dieser Ausführung findet ein zusätzlicher Aufschrumpfvorgang in der bezüglich des ersten Ausführungsbeispiels beschriebenen Weise statt.

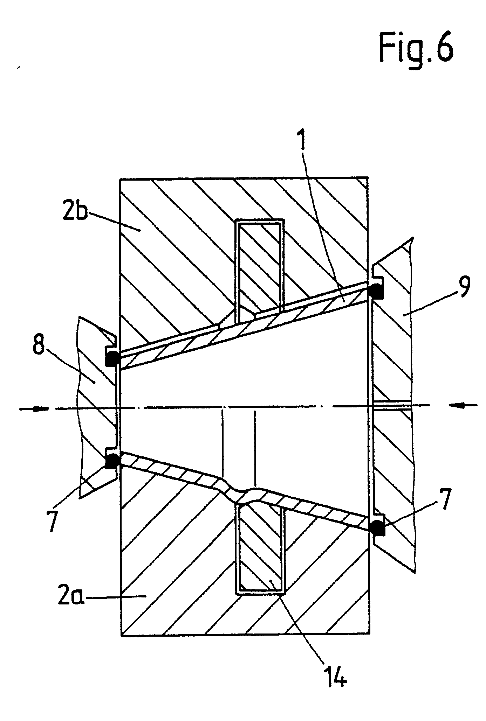

Das dritte Ausführungsbeispiel in Fig.6 zeigt einen konischen Hohlkörper 1, auf dem ein ringförmiges Teil 14 befestigt wird. Die Befestigung erfolgt wiederum mittels einer aus zwei Matrizenhälften 2a und 2b bestehenden Matrize 2, die mit Aussparungen sowohl für den Hohlkörper 1 als auch das Teil 14 versehen ist. Das Befestigen des Teils 14 erfolgt wiederum durch hydraulisches Aufweiten im Befestigungsbereich des Teiles 14, wobei in diesem Fall eine Wulst im Bereich des kleineren Durchmessers zwischen ringförmigem Teil 14 und Hohlkörper 1 erzeugt wird, um ein Abrutschen des Teiles 14 auf dem konischen Hohlkörper 1 zu verhindern, wobei das Teil 14 zuvor erwärmt worden ist, um einen zusätzlichen Aufschrumpfvorgang zu erzeugen.

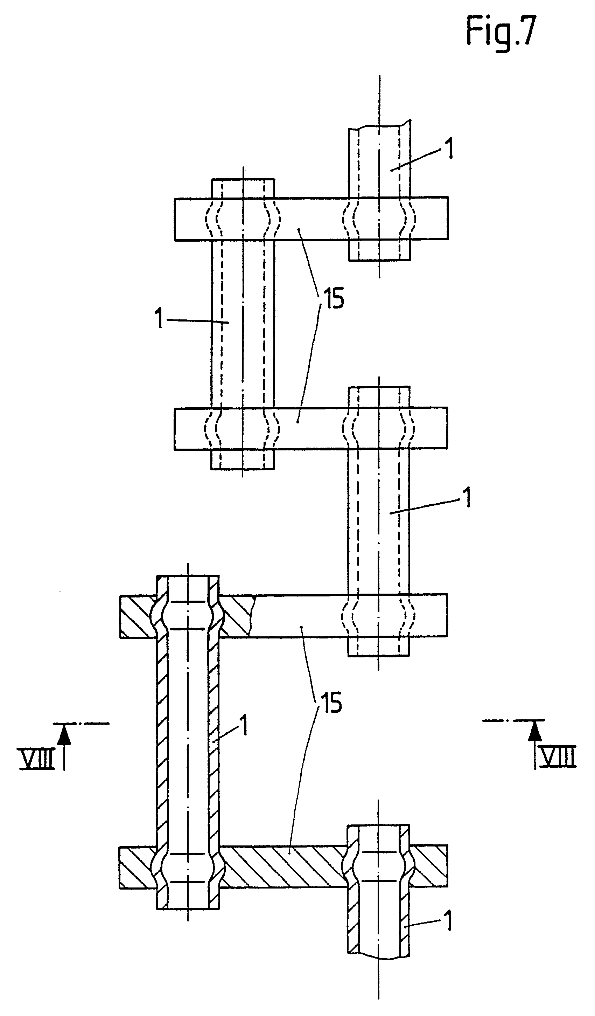

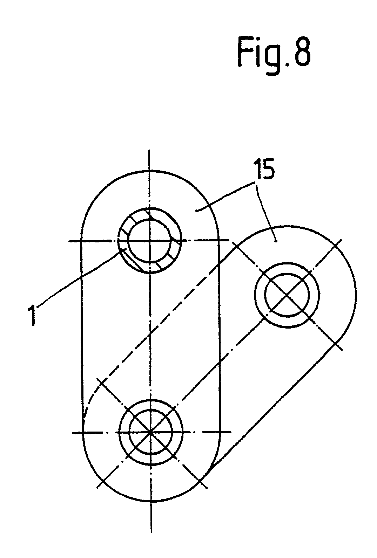

Das vierte Ausführungsbeispiel nach den Figuren 7 und 8 zeigt schließlich, daß mehrere Hohlkörper 1 gemäß dem voranstehend beschriebenen Verfahren miteinander durch jeweils ein Teil 15 verbunden werden können. Für den hierzu erforderlichen Befestigungsvorgang können die Hohlkörper 1 mit den zuvor erwärmten Teilen 15 ebenfalls in eine auf der Zeichnung nicht dargestellte mehrteilige Matrize eingelegt werden, die mit entsprechenden Aussparungen für die Hohlkörper 1 und Teile 15 sowie mit Kanälen zur Zuführung eines Druckmittels versehen ist, so daß die Hohlkörper 1 im Bereich der Befestigungsstellen der Teile 15 aufgeweitet werden. Hierbei ist es möglich, daß für die Aufweitung der unterschiedlichen Hohlkörper 1 unterschiedliche Drücke verwendet werden. Einen Querschnitt gemäß der Schnittlinie VIII-VIII in Fig. 7 zeigt Fig.8, aus der hervorgeht, daß die Hohlkörper 1 nicht in einer gemeinsamen Ebene angeordnet sein müssen.

Anstelle des bei den Ausführungsbeispielen beschriebenen hydraulischen Aufweitens kann der Aufweitvorgang auch durch Sprengen, elektro-hydraulisches Aufweiten oder durch mechanische sowie magnetische Kräfte erfolgen. Außerdem ist es möglich, nicht nur die auf den Zeichnungen dargestellten, mittels Durchgangsöffnungen vollständig auf dem Hohlkörper sitzenden Teile zu befestigen, sondern auch an den Enden des Hohlkörpers angeordnete Teile, die nur mittels einer Anbohrung auf dem Hohlkörperende sitzen.

## Bezugsziffernliste

| 1 | Hohlkörper |
|---|---|
| 2 | Matrize |
| 2a | Matrizenhälfte |
| 2b | Matrizenhälfte |
| 2c | Flansch |
| 2d | Abstützfläche |
| 3 | Klammer |
| 4 | Teil |
| 5 | Teil |
| 6 | Teil |
| 7 | Dichtung |
| 8 | Verschlußstopfen |
| 9 | Anschlußstück |
| 9a | Bohrung |
| 10 | Teil |
| 11 | Teil |
| 11a | feststehender Teil |
| 11b | Kugel |
| 12 | Sonde |
| 12a | Verbindungskanal |
| 12b | Druckkanal |
| 12c | Entlastungskanal |
| 13 | Dichtringpaar |
| 14 | Teil |
| 15 | Teil |

## Ansprüche

1. Verfahren zur Befestigung von jeweils mit einer Öffnung versehenen Hocken, Lagerringen und/oder Antriebselementen auf einer Hohlwelle, wobei im Ausgangszustand der in diesen Teilen (4,5,6,10,11,14,l5) ausgebildete Innendurchmesser der Öffnung größer als der Außendurchmesser der für ihre Befestigung vorgesehenen Fläche an der Hohlwelle (1) ist und die Teile (4,5,6,10,11,14,15) in die vorgegebene Position auf der Hohlwelle (1) gebracht werden, bevor der Befestigungsvorgang erfolgt, indem jedes Teil (4,5,6,10,11,14,15) durch Aufweiten der Hohlwelle (1) zumindest im Bereich der Befestigungsstelle auf der Hohlwelle (1) befestigt wird,

**dadurch gekennzeichnet,**

daß, bevor die Teile (4,5,6,10,11,14,15) in die vorgegebene Position auf der Hohlwelle (1) gebracht werden, durch Aufwärmen der Teile (4,5,6,10,11,14,15) und/oder Abkühlen der Hohlwelle (1) eine Temperaturdifferenz erzeugt worden ist und jedes Teil (4,5,6,10,11,14,15), zusätzlich zum Aufweiten der Hohlwelle (1) durch anschließendes Auf-schrumpfen der Teile (4,5,6,10,11,14,15) infolge des stattfindenden Temperaturausgleichs auf der Hohlwelle (1) befestigt wird.

2. Verfahren nach Anspruch 1, dadurch gekennzeichnet, daß die Hohlwelle (1) durch Einbringen eines Druckmittels aufgeweitet wird.

3. Verfahren nach Anspruch 1 und 2 zur Befestigung mehrerer unterschiedlicher Teile auf einer Hohlwelle, dadurch gekennzeichnet, daß die Hohlwelle (1) im Bereich der Befestigungsstellen der Teile (15) mit unterschiedlichen Drücken aufgeweitet wird.

4. Vorrichtung zum hydraulischen Auf*eiten von Abschnitten einer Hohlwelle (1) mittels einer in die Hohlwelle (1) einführbaren Sonde (12), die mittels mindestens zweier im Abstand voneinander befindlicher Dichtringpaare (13) mit dem aufzuweitenden Abschnitt einen Ringraum bildet, der zum Aufweiten mit Druckmittel gefüllt wird, wobei die Dichtringe (13) jeweils in einer ringförmigcn Aufnahmenut der Sonde (12) angeordnet sind, im Ausgangszustand beim Einführen der Sonde (12) in die Hohlwelle (1) einen höchstens dem Außendurchmesser der Sonde (12) entsprechenden Außendurchmesser haben und vor Beginn des Aufweitvorganges zur Abdichtung des Ringspaltes zwischen Sonde (12) und Hohlwelle (1) durch Beaufschlagen mit Druckmittel aufgeweitet werden, das den Aufnahmenuten durch einen an die Druckmittelzuführung angeschlossenen Verbindungsksnal (12b) zugeführt wird,

**dadurch gekennzeichnet,**

daß die Sonde (12) zwischen den Dichtringpaaren (13) jeweils mit mindestens einem Entlastungskanal (12c) versehen ist.

## Claims

1. Method for attaching cams, bearing rings and/or drive members, each provided with an opening, to a hollow shaft, the internal diameter, formed in these parts (4, 5, 6, 10, 11, 14, 15), of the opening being greater in the initial state than the external diameter of the area on the hollow shaft (1) provided for their attachment, and the parts (4, 5, 6, 10, 11, 14, 15) being brought into the predetermined position on the hollow shaft (1) before the attachment operation takes place by attaching each part (4, 5, 6, 10, 11, 14, 15) to the hollow shaft (1) by expanding the hollow shaft (1) at least in the area of the attachment point on the hollow shaft (1), characterised in that, before the parts (4, 5, 6, 10, 11, 14, 15) are brought into the predetermined position on the hollow shaft (1), a temperature difference is produced by heating the parts (4, 5, 6 10, 11, 14, 15) and/or cooling the hollow shaft (1), and each part (4, 5, 6, 10, 11, 14, 15) is attached to the hollow shaft (1) by expanding the hollow shaft (1) and then additionally shrinking on the parts (4, 5, 6, 10, 11, 14, 15) as a result of the temperature equalization.

2. Method according to claim 1, characterised in that the hollow shaft (1) is expanded by introducing a pressure medium.

3. Method according to claims 1 and 2 for attaching a plurality of different parts to a hollow shaft, characterised in that the hollow shaft (1) is expanded with different pressures in the area of the attachment points of the parts (15).

4. Device for hydraulically expanding sections of a hollow shaft (1) by means of a probe (12), which can be inserted in the hollow shaft (1) and which forms with the section to be expanded an annular space by means of at least two spaced sealing ring pairs (13), which space is filled with pressure medium for expansion purposes, the sealing rings (13) each being arranged in an annular holding groove in the probe (12), having in the initial state, when the probe (12) is inserted in the hollow shaft (1), an external diameter which corresponds at the most to the external diameter of the probe (12) and being expanded by the admission of pressure medium before the beginning of the expansion process to seal off the annular gap between the probe (12) and the hollow shaft (1), which pressure medium is supplied to the holding grooves through a connection duct (12b) connected to the pressure medium supply, characterised in that the probe (12) is provided with at least one respective relief duct (12c) between the sealing ring pairs (13).

## Revendications

1. Procédé pour la fixation sur un arbre creux de cames, de bagues de palier et/ou d'éléments d'entrainement pourvus chacun d'une ouverture, le diamètre intérieur de l'ouverture dans ces pièces (4,5,6,10,11, 14,15) étant, à l'état initial, supérieur au diamètre extérieur de la surface de l'arbre creux (1), prévue pour leur fixation, les pièces (4,5,6,10,11,14,15) étant amenées dans la position prédéfinie sur l'arbre creux (1) avant que soit effectuée l'opération de fixation selon laquelle chaque pièce (4,5,6,10,11,14,15) est fixée sur l'arbre creux (1) par expansion de celui-ci au moins dans la zone de fixation, caractérisé en ce que, avant la mise en place des pièces (4,5,6,10,11,14,15), selon leur position prédéfinie, sur l'arbre creux (1), on crée une différence de température par chauffage des pièces (4,5,6,10,11,14,15) et/ou refroidissement de l'arbre creux (1), et en ce que chaque pièce (4,5,6,10, 11,14,15) est fixée sur l'arbre creux (1), en plus de l'expansion de l'arbre creux (1), par le frettage des pièces (4,5,6,10,11,14,15) qui suit, du fait de l'égalisation de température qui se produit.

2. Procédé selon la revendication 1, caractérisé en ce que l'arbre creux (1) subit une expansion du fait de l'introduction d'un fluide sous pression.

3. Procédé selon les revendications 1 et 2, pour la fixation de plusieurs pièces différentes sur un arbre creux, caractérisé en ce que l'arbre creux (1) subit une expansion, dans les zones de fixation des pièces (15), avec des pressions différentes.

4. Appareil pour l'expansion hydraulique de tronçons d'un arbre creux (1) à l'aide d'une sonde (12) pouvant être introduite à l'intérieur de l'arbre creux (1), et qui forme avec le tronçon devant subir l'expansion, au moyen d'au moins deux paires espacées d'anneaux d'étanchéité (13), un espace annulaire qui est rempli de fluide sous pression pour l'opération d'expansion, les anneaux d'étanchéité (13) étant chacun disposé dans une rainure de réception annulaire de la sonde (12), présentent à l'état initial, lors de l'introduction de la sonde dans l'arbre creux (1), un diamètre extérieur qui au plus est égal au diamètre extérieur de la sonde (12), et qui avant le début de l'opération d'expansion, en vue d'assurer l'étanchéité de l'espace annulaire entre la sonde (12) et l'arbre creux (1), sont soumis à une expansion du fait de l'action du fluide sous pression qui est amené aux rainures de réception par l'intermédiaire d'un canal de liaison (12b) relié à l'alimentation en fluide sous pression, caractérisé en ce que la sonde (12) est munie, à chaque fois entre les paires d'anneaux d'étanchéité (13), d'au moins un canal de décharge (12c).

Fig.1

Fig. 2

Fig. 3

Fig.4

# Fig.5

## Fig.6

# Fig.7

# Fig.8